# EUROPÄISCHE PATENTSCHRIFT

(11) **EP 2 342 078 B1**
(45) Veröffentlichungstag und Bekanntmachung des Hinweises auf die Patenterteilung: **15.06.2016**
(21) Anmeldenummer: 09736951.6
(22) Anmeldetag: 19.10.2009
(51) Int. Cl.: B32B 27/00, G02B 5/22

(54) **NANOSKALIGE IR-ABSORBER IN MEHRSCHICHTIGEN FORMKÖRPERN**
NANOSCALE IR ABSORBER IN MULTILAYER MOLDED BODIES
ABSORBANTS INFRAROUGES NANOMÉTRIQUES DANS DES CORPS MOULÉS STRATIFIÉS

(30) Priorität: 28.10.2008 EP 08167760
(43) Veröffentlichungstag der Anmeldung: 13.07.2011
(73) Patentinhaber: BASF SE, 67056 Ludwigshafen am Rhein (DE)
(72) Erfinder: LÖBEL, Johannes, 68165 Mannheim (DE); SCHERER, Günter, 67435 Neustadt (DE); SCHEHATA, Sami, 67141 Neuhofen (DE)
(74) Vertreter: BASF IP Association
(86) Internationale Anmeldenummer: PCT/EP2009/063636
(87) Internationale Veröffentlichungsnummer: WO 2010/049300

(56) Entgegenhaltungen:
- WO-A2-2005/067524
- WO-A2-2008/091385
- US-A1- 2007 034 833

## Beschreibung

Die vorliegende Erfindung betrifft mehrschichtige Formkörper, die nanoskalige IR-Absorber enthalten. Weiterhin betrifft die vorliegende Erfindung Verfahren zur Herstellung solcher mehrschichtiger Formkörper. Verwendungen dieser mehrschichtigen Formkörper, insbesondere im Wärmemangement, als Gewächshausfolien oder als Bestandteil von Festern, sind ebenfalls Gegenstand der Erfindung. Ein weiterer Gegenstand der Erfindung sind Gegenstände, die solche mehrschichtige Formkörper enthalten.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen. Bevorzugt bzw. ganz bevorzugt sind die Ausführungsformen der vorliegenden Erfindung in denen alle Merkmale die bevorzugten bzw. ganz bevorzugten Bedeutungen haben.

US 2008/0075936 A1 beschreibt Filme zur Kontrolle der Sonneneinstrahlung sowie Verfahren zur Herstellung solcher Filme. Diese Filme enthalten einen ein- oder mehrlagigen Kernbereich, der wenigstens eine Lage bestehend aus einem orientierten thermoplastischen Kunststoffmaterial enthält. Im orientierten thermoplastischen Kunststoff sind IR-absorbierende Nanopartikel dispergiert.

In der EP 1 865 027 A1 werden bestimmte ausgewählte Polycarbonatharze beschrieben, die feinteilige Metallboride enthalten. Die aus diesen Harzzusammensetzungen hergestellten Produkte zeigen optische Transparenz und Abschirmung von Wärmestrahlung. Die in der EP 1 865 027 A1 genannten Produkte lassen sich als Fenstermaterialien, Bedachungsmaterialien oder als Folien in der Landwirtschaft einsetzen.

US 2004/0028920 A1 beschreibt einen Masterbatch enthaltend eine Komponente zur Abschirmung von Wärmestrahlung und ein thermoplastisches Polymer. Zur Abschirmung der Wärmestrahlung werden Hexaboride in einer Menge von 0,01 bis 20 Gew.-% bezogen auf das thermoplastische Polymer eingesetzt. Nach den Angaben in der US 2004/0028920 A1 lassen sich mit Hilfe eines solchen Masterbatchs Formkörper mit einer hohen Transparenz gegenüber sichtbarem Licht sowie einer hohen Abschirmung gegenüber Wäremestrahlung herstellen.

In der EP 1 529 632 A1 werden mehrlagige Folien und Verfahren zu deren Herstellung beschrieben. Die mehrlagigen Folien enthalten einen Kernbereich mit einer Lage aus einem thermoplastischen Polymer und einem IR-Absorber. Diese Kernlage wird durch eine obere Lage aus einem thermoplastischen Polymer enthaltend weitere Additive oder durch eine obere und untere Lage aus einem thermoplastischen Polymer enthaltend weitere Additive umgeben. Die technische Lehre der EP 1 529 632 A1 hebt hervor, dass es nötig sei, den IR-Absorber in der Kernlage der mehrlagigen Folie zu dispergieren, da nach den Angaben der EP 1 529 632 A1 mit dem Dispergieren des IR-Absorbers in der oberen Lage ein starker Anstieg der Eintrübung des Materials zu beobachten ist; vgl. Abschnitte [0075] bis [0082] der EP 1 529 632 A1.

US 2007/0034833 A1 offenbart Matrizen, die mit Halbleiter-Nanokristallen dotiert sind. Diese Nanokristalle sind in Größe und Zusammensetzung so ausgewählt, dass sie Licht einer bestimmten Wellenlänge ausstrahlen oder absorbieren können.

WO 2008/091385 A2 offenbart einen transparenten Film zur Kontrolle von infraroter Strahlung enthaltend wenigstens ein orientiertes thermoplastisches Polymermaterial.

WO 2005/067524 A2 offenbart Matrizen, die Halbleiter-Nanokristalle enthalten. Die Halbleiter-Nanokristalle werden dabei so ausgewählt und angeordnet, dass die Matrix bestimmte Brechungsindices aufweist.

Die übermäßige Aufnahme von Wärmestrahlung, insbesondere der Wärmestrahlung des Sonnenlichts durch die Oberfläche von beispielsweise Gebäuden, Fahrzeugen, Lagerhallen oder Gewächshäusern führt häufig zu einem deutlichen Anstieg der Innentemperaturen, insbesondere in Gegenden mit hoher Sonneneinstrahlung. Dieser Anstieg der Wärmeeinwirkung z.B. auf das Innere von Gebäuden bzw. der Personen die sich in den Gebäuden aufhalten wird technisch häufig durch den energieintensiven Gebrauch von Klimaanlagen ausgeglichen. Beispielsweise werden in einem in der Sommersonne geparkten Fahrzeug im Inneren regelmäßig Temperaturen über 60°C erreicht.

Durch die Abschirmung der Wärmestrahlung sollen jedoch häufig andere Bereiche des Sonnenspektrums nicht ebenfalls ausgeblendet werden. Insbesondere bei der Abschirmung der Wärmestrahlung durch Fenster oder Gewächshausfolien wird neben einer effektiven Abschirmung der Wärmestrahlung eine hohe Transparenz im sichtbaren Spektralbereich angestrebt. Gerade bei diesen Anwendungen wird daher nur eine geringe Trübung der Materialien durch den Wärmeschutz akzeptiert.

Eine Aufgabe der vorliegenden Erfindung war es daher, eine Abschirmung gegen Wärmestrahlung bei der Einwirkung von Licht, insbesondere von Sonnenstrahlung auf die Oberfläche von beispielsweise Gebäuden, Fahrzeugen oder Gewächshäusern bereitzustellen.

Eine weitere Teilaufgabe der Erfindung war es eine hohe Transparenz gegenüber sichtbarem Licht bei einer gleichzeitigen effektiven Abschirmung der Wärmestrahlung zu gewährleisten.

Diese und andere Aufgaben wurden, wie im Weiteren beschrieben, gelöst durch mehrschichtige Formkörper (1) umfassend:
a. eine Deckschicht (2) enthaltend
   i. ein thermoplastisches Polymer und
   ii. mindestens einen nanoskaligen IR-Absorber (8), sowie
b. eine unter der Deckschicht (2) angeordnete Innenschicht (3) enthaltend i. ein thermoplastisches Polymer,
wobei der IR-Absorber ein nanopartikuläres Zinn-Oxid dotiert mit Antimon oder Indium oder ein nanopartikuläres Borid der seltenen Erden ist.

Selbstverständlich kann die Deckschicht (2) oder die Innenschicht (3) auch Mischungen von thermoplastischen Polymeren enthalten. "Mindestens ein" nanoskaliger IR-Absorber bedeutet, dass "ein oder mehrere" nanoskalige IR-Absorber enthalten sein können.

Als Infrarotstrahlung (kurz IR-Strahlung) werden im Rahmen der vorliegenden Erfindung elektromagnetische Wellen im Spektralbereich zwischen sichtbarem Licht und den längerwelligen Mikrowellen bezeichnet. Dies entspricht einem Wellenlängenbereich von etwa 760 nm bis 1 mm. Bei kurzwelliger IR-Strahlung (ab 760 nm) spricht man oft von nahem Infrarot (near infrared, NIR), bei Wellenlängen von ca. 5-25 Mikrometer von mittlerem Infrarot (mid infrared, MIR). Extrem langweilige IR-Strahlung (25 µm-1 mm) bezeichnet man als fernes Infrarot (far infrared, FIR). Wärmestrahlung ist insbesondere Infrarotstrahlung.

Als UV-Strahlung werden im Rahmen der vorliegenden Erfindung elektromagnetische Wellen im Spektralbereich von etwa 200 nm bis 400 nm bezeichnet.

Als sichtbares Licht werden im Rahmen der vorliegenden Erfindung elektromagnetische Wellen im Spektralbereich von etwa 400 nm bis 760 nm bezeichnet.

Im Allgemeinen wird ein Material transparent genannt, wenn man Dahinterliegendes relativ klar erkennen kann - beispielsweise Fensterglas. Transparenz bedeutet als im Rahmen der vorliegenden Erfindung optische Transparenz im Wesentlichen ohne Streuung des Lichts durch das transparente Material im sichtbaren Spektralbereich.

Zur Messung der Trübung (Haze) kann ein Haze-Messgerät, beispielsweise der Firma Bykgardner verwendet. Es besteht aus einer Röhre, die vor eine Ulbrichtkugel platziert wird. Die Messung der Trübung lässt sich gemäß ASTM D1003-7 durchführen, wie beispielsweise in EP 1 529 632 A1 erwähnt.

Substanzen die elektromagnetische Strahlung im Wellenlängenbereich der IR-Strahlung absorbieren werden im Rahmen der vorliegenden Erfindung auch als IR-Absorber bezeichnet. Bevorzugt weisen IR-Absorber eine Absorption im Wellenlängenbereich von 760 bis 2000 nm, ganz bevorzugt von 780 bis 1500 nm und einen Extinktionskoeffizienten für IR-Strahlung von mindestens 100 I/(cm * mol) auf. Bevorzugt liegt der Extinktionskoeffizienten für IR-Strahlung über 1000 I/(cm * mol) und ganz bevorzugt über 10⁴ I/(cm * mol).

Als "nanoskalig" oder "nanopartikulär" werden im Rahmen der vorliegenden Erfindung Teilchen bezeichnet deren größter mittlerer Durchmesser kleiner 500 Nanometer (nm), bevorzugt von 10 bis 300 nm, insbesondere von 20 bis 200 nm beträgt. Die nanoskaligen Teilchen können sowohl anorganische als auch organische sowie gemischt organische/anorganische Bestandteile enthalten. Die Teilchengröße bzw. die Teilchengrößenverteilung nanopartikulärer Teilchen lässt sich, wie dem Fachmann bekannt ist, beispielsweise durch dynamische Lichtreuung oder durch elektronenmikroskopische Verfahren, z.B. TEM-Aufnahmen, ermitteln.

Die Deckschicht (2) des mehrschichtigen Formkörpers (1) befindet sich auf der dem Licht, insbesondere dem Sonnenlicht, oder der Wärmestrahlung (9) zugewandten Seite oder Fläche des mehrschichtigen Formkörpers, während die Innenschicht (3) sich auf der dem Licht bzw. der Wärmestrahlung abgewandten Seite befindet.

Die Deckschicht (2) des mehrschichtigen Formkörpers (1) befindet sich in unmittelbarer Nachbarschaft der Innenschicht (3). In unmittelbarer Nachbarschaft bedeutet, dass die Innenschicht (3) von der Deckschicht (2) lediglich durch eine oder mehrere weitere Schichten oder Hohlräume mit einer Gesamtdicke der weiteren Schichten von maximal 50 mm getrennt vorliegt. In einer bevorzugten Ausführungsform des erfindungsgemäßen mehrschichtigen Formkörpers (1) steht die Deckschicht (2) direkt im unmittelbaren Kontakt mit der Innenschicht (3).

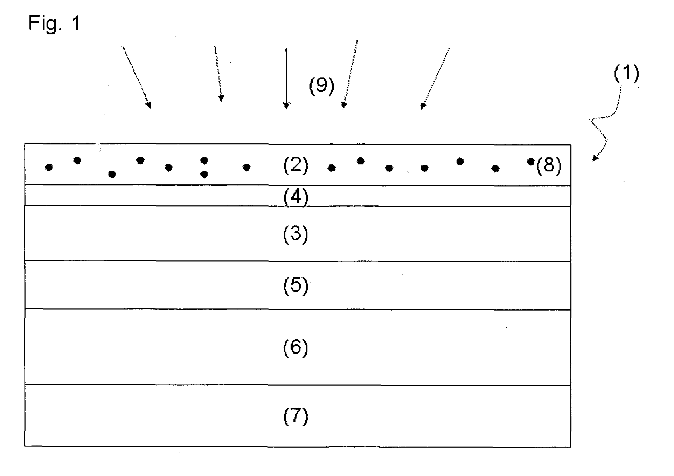

Optionale weitere Schichten, beispielsweise (5), (6) und/oder (7), des erfindungsgemäßen mehrschichtigen Formkörpers (1) befinden sich im Allgemeinen, wie aus der Figur 1 ersichtlich, unterhalb der Innenschicht (3) auf der vom Licht abgewandten Seite des mehrschichtigen Formkörpers. Es ist jedoch auch möglich, dass sich zu einem geringen Teil weitere Schichten (4) zwischen Deckschicht (2) und Innenschicht (3) befinden, wobei sich jedoch die Deckschicht (2) immer in unmittelbarer Nachbarschaft der Innenschicht (3) befindet. Die weiteren Schichten können auch Hohlräume, insbesondere mit Luft gefüllte Hohlräume, aufweisen.

In einer bevorzugten Ausführungsform des mehrschichtigen Formkörpers (1) besteht dieser aus zwei Schichten, nämlich der Deckschicht (2) und der Innenschicht (3).

In einer weiteren Ausführungsform des mehrschichtigen Formkörpers (1) besteht dieser aus drei Schichten, nämlich der Deckschicht (2), der Innenschicht (3) und einer weiteren Schicht (5) unterhalb der Innenschicht (3), die bevorzugt die gleiche Zusammensetzung wie die Deckschicht (2) aufweist.

Die Schichtdicke der Deckschicht (2), der Innenschicht (3) und der optionalen weiteren Schichten kann z.B. je nach Anwendung in einem weiten Bereich variieren. Häufig beträgt die Schichtdicke von 0,01 bis 50 mm, bevorzugt von 0,75 bis 30 mm, ganz bevorzugt von 0,85 bis 25 mm und insbesondere von 1 mm bis 20 mm.

In einer bevorzugten Ausführungsform des mehrschichtigen Formkörpers (1) beträgt die Schichtdicke der Deckschicht (2) zwischen 0,01 und 1 mm, bevorzugt von 0,02 bis 0,5 mm, besonders bevorzugt von 0,03 bis 0,1 mm und insbesondere von 0,03 bis 0,05 mm.

Als thermoplastische Polymere kommen Oligomere, Polymere, lonomere, Dendrimere, Copolymere, beispielsweise Blockcopolymere, Graft-Copolymere, Sternförmige Blockcopolymere, Random-Blockcopolymer oder Mischungen aus diesen in Frage.

Im Allgemeinen weisen die thermoplastischen Polymere massengewichtete Molekulargewichte Mw von 3000 bis 1000000 g/mol auf. Bevorzugt beträgt Mw 10000 bis 100000 g/mol, ganz bevorzugt 20000 bis 50000 g/mol, insbesondere von 25000 bis 35000 g/mol.

In der Regel werden als thermoplastische Polymere in der Deckschicht (2) Polymere mit hoher optischer Transparenz eingesetzt, es lassen sich jedoch auch opake Polymere einsetzen. Bevorzugt sind Polymere mit hoher Transparenz im sichtbaren Spektralbereich. Im Allgemeinen wählt der Fachmann für die thermoplastischen Polymere in der Deckschicht (2) Polymere mit guter Witterungsbeständigkeit, geringer Wasseraufnahme, hoher chemischer Beständigkeit und hoher mechanischer Beständigkeit, beispielsweise Kratzfestigkeit. Bevorzugt weisen die thermoplastischen Polymere der Deckschicht (2) eine gute Verträglichkeit in der Schmelze mit den thermoplastischen Polymeren der Innenschicht (3) auf.

In einer bevorzugten Ausführungsform des erfindungsgemäßen mehrschichtigen Formkörpers (1) entspricht das thermoplastische Polymer in der Deckschicht (2) einem Polyacetal, Polyacrylat, Polyalkylacrylat, Polycarbonat, Polystyrol, Polyester, Polyamid, Polyamidimid, Polyarylat, Polyarylsulfon, Polyethersulfon, Polyphenylsulfid, Polyvinylchlorid, Polysulfon, Polyimid, Polyetherimid, Polytetrafluorethylen, Polyetherketon, Polyetheretherketon, Polyetherketoketon, Polybenzooxazol, Polyoxadiazol, Polybenzothiazinophenothiazin, Polybenzothiazol, Polypyrazinoquinoxalin, Polypyromellitimid, Polyquinoxalin, Polybenzimidazol, Polyoxindol, Polyoxoisoindolin, Polydisoxoisoindolin, Polytriazin, Polypyridazin, Polypiperazin, Polypyridin, Polypiperidin, Polytriazol, Polypyrazol, Polypyrrolidin, Polycarboran, Polyoxabicyclononan, Polybicyclonon, Polydibenzofuran, Polyphthalid, Polyacetal, Polyanhydrid, Polyvinylether, Polyvinylthioether, Polyvinylalkohol, Polyvinylketon, Polyvinylhalogenid, Polyvinylnitril, Polyvinylester, Polysulfonat, Polysulfid, Polythioester, Polysulfonamid, Polyuretan, Polyphosphazin, Polysilazan, Polyimid, Polymethylmethacrylat (PMMA), Polyethylenterephthalat (PET), Polyolefine, beispielsweise Polyethylen (PE) oder Polypropylen (PP), Acrylonitril-Styrol-Acrylate (ASA), Polyvinylbutyral oder einer Mischung aus diesen Polymeren. Mischungen umfassen auch Blends dieser Polymere.

Bevorzugt werden als thermoplastische Polymere in der Deckschicht (2) Polycarbonate, Polyester, Blends aus Polyester und Polycarbonat, Polycarbonat-Polyester-Copolymere, Polycarbonat-Polysiloxan-Copolymere, PMMA, PE oder PET eingesetzt. Insbesondere bevorzugt sind Polycarbonate, PE oder PMMA .

In der Regel werden als thermoplastische Polymere in der Innenschicht (3) Polymere mit hoher optischer Transparenz eingesetzt, es lassen sich jedoch auch opake Polymere einsetzen. Bevorzugt sind Polymere mit hoher Transparenz im sichtbaren Spektralbereich. Im Allgemeinen wählt der Fachmann für die thermoplastischen Polymere in der Innenschicht (3) Polymere mit guter Witterungsbeständigkeit, geringer Wasseraufnahme und hoher chemischer und mechanischer Beständigkeit. Bevorzugt weisen die thermoplastischen Polymere der Innenschicht (3) eine gute Verträglichkeit in der Schmelze mit den thermoplastischen Polymeren der Deckschicht (2) auf.

In einer bevorzugten Ausführungsform des erfindungsgemäßen mehrschichtigen Formkörpers (1) entspricht das thermoplastische Polymer in der Innenschicht (3) einem Polyacetal, Polyacrylat, Polyalkylacrylat, Polycarbonat, Polystyrol, Polyester, Polyamid, Polyamidimid, Polyarylat, Polyarylsulfon, Polyethersulfon, Polyphenylsulfid, Polyvinylchlorid, Polysulfon, Polyimid, Polyetherimid, Polytetrafluorethylen, Polyetherketon, Polyetheretherketon, Polyetherketoketon, Polybenzooxazol, Polyoxadiazol, Polybenzothiazinophenothiazin, Polybenzothiazol, Polypyrazinoquinoxalin, Polypyromellitimid, Polyquinoxalin, Polybenzimidazol, Polyoxindol, Polyoxoisoindolin, Polydisoxoisoindolin, Polytriazin, Polypyridazin, Polypiperazin, Polypyridin, Polypiperidin, Polytriazol, Polypyrazol, Polypyrrolidin, Polycarboran, Polyoxabicyclononan, Polybicyclonon, Polydibenzofuran, Polyphthalid, Polyacetal, Polyanhydrid, Polyvinylether, Polyvinylthioether, Polyvinylalkohol, Polyvinylketon, Polyvinylhalogenid, Polyvinylnitril, Polyvinylester, Polysulfonat, Polysulfid, Polythioester, Polysulfonamid, Polyuretan, Polyphosphazin, Polysilazan, Polyimid, Polymethylmethacrylat (PMMA), Polyethylenterephthalat (PET), Polyolefine, beispielsweise Polyethylen (PE) oder Polypropylen (PP), Acrylonitril-Styrol-Acrylate (ASA), Polyvinylbutyral oder einer Mischung aus diesen Polymeren. Mischungen umfassen auch Blends dieser Polymere.

Bevorzugt werden als thermoplastische Polymere in der Innenschicht (3) Polycarbonate, Polyester, Blends aus Polyester und Polycarbonat, Polycarbonat-Polyester-Copolymere, Polycarbonat-Polysiloxan-Copolymere, PMMA, PE oder PET eingesetzt. Insbesondere bevorzugt sind Polycarbonate, PE oder PMMA .

In einer weiteren Ausführungsform des erfindungsgemäßen mehrschichtigen Formkörpers (1) kann auf der Deckschicht (2), auf der der Innenschicht (3) abgewandten Seite, eine kratzfeste, insbesondere transparente, Beschichtung/Coating aufgebracht werden.

Die optionalen weiteren Schichten des erfindungsgemäßen mehrschichtigen Formkörpers enthalten in der Regel ebenfalls eines der oben genannten thermoplastischen Polymere. Bevorzugt werden die in der optionalen weiteren Schicht eingesetzten Polymere aus den oben genannten bevorzugten thermoplastischen Polymeren der Deckschicht oder der Innenschicht gewählt. Ganz bevorzugt entsprechen die in der optionalen weiteren Schicht eingesetzten Polymere den thermoplastischen Polymeren der Deckschicht oder der Innenschicht.

In einer weiteren bevorzugten Ausführungsform des erfindungsgemäßen mehrschichtigen Formkörpers (1) sind die thermoplastischen Polymere in der Deckschicht (2) und in der Innenschicht (3) gleich und entsprechen einem Polyacetal, Polyacrylat, Polyalkylacrylat, Polycarbonat (PC), Polystyrol, Polyester, Polyamid, Polyamidimid, Polyarylat, Polyarylsulfon, Polyethersulfon, Polyphenylsulfid, Polyvinylchlorid, Polysulfon, Polyimid, Polyetherimid, Polytetrafluorethylen, Polyetherketon, Polyetheretherketon, Polyetherketoketon, Polybenzooxazol, Polyoxadiazol, Polybenzothiazinophenothiazin, Polybenzothiazol, Polypyrazinoquinoxalin, Polypyromellitimid, Polyquinoxalin, Polybenzimidazol, Polyoxindol, Polyoxoisoindolin, Polydisoxoisoindolin, Polytriazin, Polypyridazin, Polypiperazin, Polypyridin, Polypiperidin, Polytriazol, Polypyrazol, Polypyrrolidin, Polycarboran, Polyoxabicyclononan, Polybicyclonon, Polydibenzofuran, Polyphthalid, Polyacetal, Polyanhydrid, Polyvinylether, Polyvinylthioether, Polyvinylalkohol, Polyvinylketon, Polyvinylhalogenid, Polyvinylnitril, Polyvinylester, Polysulfonat, Polysulfid, Polythioester, Polysulfon, Polysulfonamid, Polyuretan, Polyphosphazin, Polysilazan, Polyimid, Polymethylmethacrylat, Polyethylenterephthalat (PET), Polyolefine, Acrylonitril-Styrol-Acrylate (ASA), Polyamid, Polyethersulfon, Polyvinylchlorid, Polysulfon oder einer Mischung aus diesen Polymeren. Mischungen umfassen auch Blends dieser Polymere.

Bevorzugt werden im Falle gleicher thermoplastischer Polymere in der Deckschicht (2) und der Innenschicht (3) als Polymere PC, PE oder PMMA eingesetzt. Insbesondere bevorzugt sind PC und PE.

In einer bevorzugten Ausführungsform des erfindungsgemäßen mehrschichtigen Formkörpers (1) werden die nanoskaligen IR-Absorber (8) feinverteilt eingestetzt. Der Begriff "feinverteilt" bedeutet, dass eine gleichförmige Dispersion der IR-Absorber (8) in der Deckschicht (2) vorliegt. Eine solche Dispergierung wird dadurch erreicht, dass die nanoskaligen IR-Absorber im Wesentlichen keine Aggregate oder Teilchen bilden die größer als 500 nm sind. Bevorzugt liegen keine Aggregate oder Teilchen größer als 300 nm, ganz bevorzugt liegen keine Aggregate oder Teilchen größer als 200 nm vor. Insbesondere liegen voneinander getrennte Nanopartikel mit einem mittleren Abstand von wenigstens 200 nm vor. In einer Ausführungsform haben mehr als 90% der Teilchen eine mittlere Teilchengröße von weniger als 200 nm. In einer weiteren Ausführungsform haben mehr als 95% der Teilchen eine mittlere Teilchengröße von weniger als 200 nm. In einer weiteren Ausführungsform haben mehr als 99% der Teilchen eine mittlere Teilchengröße von weniger als 200 nm.

In einer weiteren bevorzugten Ausführungsform des erfindungsgemäßen mehrschichtigen Formkörpers (1) enthält die Deckschicht (2) keine Teilchen oder Aggregate mit einer mittleren Teilchengröße von mehr als 500 nm. Bevorzugt sind keine Teilchen oder Aggregate mit einem Durchmesser von mehr als 300 nm enthalten.

Erfindungsgemäß werden nanoskalige IR-Absorber in partikulärer Form eingesetzt. Die Teilchen können dabei beliebige Gestalt annehmen. Beispielsweise sind kugelförmige, stäbchenförmige, plättchenförmige Teilchen oder Teilchen mit unregelmäßiger Gestalt möglich. Es können auch nanoskalige IR-Absorber mit bimodalen oder multimodalen Teilchengrößenverteilungen eingesetzt werden.

Erfindungsgemäß werden als IR-Absorber nanoskaliges Zinn-Oxid, dotiert mit Antimon (ATO) oder Indium (ITO) oder ein nanopartikuläres Borid der seltenen Erden eingesetzt. Ganz besonders bevorzugt sind Metallhexaboride der symbolischen Formel MB₆, insbesondere M = La, Pr, Nd, Ce, Tb, Dy, Ho, Y, Sm, Eu, Er, Tm, Yb, Lu. Ein ganz ausgezeichneter IR-Absorber ist nanoskaliges Lanthanhexaborid (LaB₆). Selbstverständlich sind auch Mischungen der genannten nanoskaligen Stoffe als IR-Absorber geeigent. Nanopartikuläres LaB₆ ist kommerziell erhältlich oder kann gemäß den Verfahren aus WO 2006/134141 oder WO2007/107407 hergestellt werden.

Die Menge an eingesetztem IR-Absorber kann über einen weiten Bereich variieren und hängt beispielsweise von der Oberfläche der Deckschicht (2) ab, die der Wärmestrahlung ausgesetzt ist. Weiterhin ist die eingesetzte Menge an IR-Absorber im Allgemeinen abhängig von der Schichtdicke der verwendeten Deckschicht (2). Ausschlaggebend für eine effektive Wirkung des IR-Absorbers ist in der Regel, dass beim Durchtritt der Wärmestrahlung durch die Deckschicht (2) genügend IR-Absorber im Strahlungsgang vorhanden ist um die Wärmestrahlung zu absorbieren.

Die Menge an nanoskaligem IR-Absorber beträgt bis zu 2 Gew.-% bezogen auf das thermoplastische Polymer der Deckschicht (2). Bevorzugt beträgt die Menge an IR-Absorber 0,001 bis 1 Gew.-%, ganz bevorzugt 0,01 bis 0,8 Gew.-% und insbesondere 0,01 bis 0,5 Gew.-%.

Der Anteil der IR-Strahlung der auf die Oberfläche des erfindungsgemäßen mehrschichtigen Formkörpers (1) trifft und von diesem absorbiert wird ist von der jeweiligen gewünschten Anwendung abhängig. Beispielsweise absorbiert der mehrschichtige Formkörper mehr als 5% der auf seiner Oberfläche einfallenden IR-Strahlung. Bevorzugt werden mehr als 20%, ganz bevorzugt mehr als 50% und insbesondere mehr als 90% der auf die Oberfläche auftreffenden IR-Strahlung absorbiert.

In einer weiteren bevorzugten Ausführungsform des erfindungsgemäßen mehrschichtigen Formkörpers (1) enthält die Deckschicht (2) nur einen geringen Gehalt an ZrO₂. Bevorzugt sind weniger als 0,2 Gew.-% bezogen auf die Deckschicht (2) an ZrO₂ enthalten, besonders bevorzugt 0,15 Gew.-%.

In einer weiteren bevorzugten Ausführungsform des erfindungsgemäßen mehrschichtigen Formkörpers (1) enthält die Deckschicht (2) bevorzugt von 0,001 bis 1 Gew.-%, ganz bevorzugt 0,01 bis 0,8 Gew.-% und insbesondere 0,01 bis 0,5 Gew.-% LaB₆ und nur einen geringen Gehalt an ZrO₂. Bevorzugt sind weniger als 50 Gew.-% ZrO₂ bezogen auf die Gesamtmenge an ZrO₂ und LaB₆, besonders bevorzugt weniger als 40 Gew.-%.

In einer weiteren Ausführungsform des erfindungsgemäßen mehrschichtigen Formkörpers (1) werden in der Deckschicht (2) und/oder der Innenschicht (3) zusätzliche Additive eingesetzt. Bevorzugt werden als zusätzliche Additive UV-Absorber, nichtpartikuläre organische IR-Absorber, Stabilisatoren, Antioxidantien, Farbmittel, anorg. Salze,

Perlglanzpigmente, NIR-reflektierende Substanzen, Antibeschlagsmittel oder Füllstoffe eingesetzt. Nichtpartikuläre organische IR-Absorber liegen nicht als nanoskalige Teilchen, sondern molekular gelöst in der Matrix des thermoplastischen Polymers vor.

In einer bevorzugten Ausführungsform des erfindungsgemäßen mehrschichtigen Formkörpers (1) werden in der Deckschicht (2) zusätzlich Stabilisatoren eingesetzt um die Auswirkungen der Erhöhung der Temperatur von typischerweise 10 bis 30°C durch die Absorption der Wärmestrahlung auf das thermoplastische Polymer zu kompensieren. Ein weiterer Vorteil dieser Ausführungsform liegt darin, dass das thermoplastische Polymer der Deckschicht (2) während der Verarbeitung, beispielsweise in der Schmelze stabilisiert wird. Dieser Vorteil lässt sich selbstverständlich auch für die Verarbeitung des thermoplastischen Polymers der Innenschicht (3) nutzen. Insgesamt trägt daher die zusätzliche Nutzung eines Stabilisators zur Verlängerung der Lebenszeit des mehrschichtigen Formkörpers bei.

Als Stabilisatoren sind hierbei beispielsweise Phosphite, Phosphonite, Phosphine, Gehinderte Amine (HALS-Verbindungen), Hydroxylamine, Phenole, mit Acryloyl modifizierte Phenole, Peroxid-Zersetzer, Benzofuranonderivative oder Mischungen aus diesen zu nennen. Häufig sind Stabilisatoren kommerziell erhältlich, beispielsweise unter folgenden Handelsnamen IRGAPHOS® 168, DOVERPHOS® S-9228, ULTRANOX® 641 der Firmen Ciba und Dover. Weiterhin können zusätzlich zu den Stabilisatoren auch Costabilisatoren eingesetzt werden um die thermische Stabilität zu erhöhen.

Bevorzugte Stabilisatoren sind Phosphite oder HALS-Verbindungen. Ganz bevorzugt sind HALS-Verbindungen der Firma Ciba, die unter dem Handelsnamen Chimassorb®, insbesondere Chimasorb® 119 FL, 2020, 940, oder Tinuvin®, insbesondere Tinuvin® 111, 123, 492, 494, 622, 765, 770, 783, 791, C 353, erhältlich sind. Ebenfalls ganz bevorzugt sind HALS-Verbindungen der Firma BASF SE die unter dem Handelsnamen Uvinul® erhältlich sind, insbesondere Uvinul® 4050 H (CAS-Nr. 124172-53-8), Uvinul® 4077 H (CAS-Nr. 52829-07-9) oder Uvinul® 5050 H (CAS-Nr. 152261-33-1).

Im Allgemeinen werden die Stabilisatoren in einer Menge von 0,001 bis 3 Gew.-% bezogen auf die Deckschicht (2) bzw. Innenschicht (3) eingesetzt, bevorzugt von 0,002 bis 2 Gew.-%, ganz bevorzugt von 0,003 bis 1 Gew.-% und insbesondere von 0,005 bis 0,5 Gew.-%. Falls ein Costabilisator zum Einsatz kommt, wird dieser in einer Menge von 0,001 bis 2 Gew.-% bezogen auf die Deckschicht (2) bzw. Innenschicht (3) eingesetzt.

In einer besonders bevorzugten Ausführungsform des mehrschichtigen Formkörpers (1) wird zusätzlich ein UV-Absorber in der Deckschicht (2) eingesetzt, der die Lebenszeit des mehrschichtigen Formkörpers noch weiter verlängert.

UV-Absorber absorbieren UV-Licht mit einer Wellenlänge kleiner 400 nm, insbesondere von 200 bis 400 nm. UV-Absorber können daher beispielsweise UV-A (von 320 bis 400 nm), UV-B (von 290 bis 319 nm) und/oder UV-C (von 200 bis 289 nm) Licht absorbieren. Bevorzugt absorbieren UV-Absorber UV-A und/oder UV-B Licht. Ganz besonders bevorzugt absorbieren UV-Absorber UV-A und/oder UV-B Licht und desaktiviert die aufgenommene Lichtenergie strahlungslos.

Als UV-Absorber kommen beispielsweise die kommerziell erhältlichen Verbindungen der Tinuvin®, insbesondere Tinuvin® 234, 326, 327, 328 oder Uvinul® Produktfamilien der Firmen Ciba oder BASF SE in Frage.

Die Uvinul® Lichtschutzmittel umfassen Verbindungen der folgenden Klassen: Benzophenone, Benzotriazole, Cyanoacrylate, Zimtsäureester, para-Aminobenzoate, Naphthalimide. Darüber hinaus werden weitere bekannte Chromophore eingesetzt, z.B. Hydroxyphenyltriazine oder Oxalanilide. Solche Verbindungen werden beispielsweise alleine oder in Mischungen mit anderen Lichtschutzmittel in kosmetischen Anwendungen, beispielsweise Sonnenschutzmitteln oder zur Stabilisierung von organischen Polymeren eingesetzt. Ein besonders bevorzugt eingesetzter UV-Absorber ist 4-n-Octyloxy-2-hydroxi-benzophenon. Weitere Beispiele für UV-Absorber sind:
substituierte Acrylate, wie z.B. Ethyl- oder Isooctyl-α-cyano-β,β-diphenylacrylat (hauptsächlich 2-Ethylhexyl-a-cyano-β,β-diphenylacrylat), Methyl-α-methoxycarbonyl-β-phenylacrylat, Methyl-a-methoxycarbonyl-β-(p-methoxyphenyl)acrylat, Methyl- oder Butyl-α-cyano-β-methyl-β-(p-methoxyphenyl)acrylat, N-(β-methoxycarbonyl-β-cyanovinyl)-2-methylindolin, Octyl-p-methoxycinnamat, Isopentyl-4-methoxycinnamat, Urocaninsäure oder deren Salze oder Ester;
Derivate der p-Aminobenzoesäure, insbesondere deren Ester z.B. 4-Aminobenzoesäure-ethylester oder ethoxylierte 4-Aminobenzoesäureethylester, Salicylate, substituierte Zimtsäureester (Cinnamate) wie Octyl-p-methoxycinnamat oder 4-Isopentyl-4-methoxycinnamat, 2-Phenylbenzimidazol-5-sulfonsäure oder ihre Salze.

2-Hydroxybenzophenonderivative, wie z.B. 4-Hydroxy-, 4-Methoxy-, 4-Octyloxy-, 4-Decyloxy-, 4-Dodecyloxy-, 4-Benzyloxy-, 4,2',4'- Trihydroxy-, 2'-Hydroxy-4,4'-dimethoxy-2-hydroxybenzophenon sowie 4-Methoxy-2-hydroxybenzophenon-Sulfonsäure-Natriumsalz;
Ester der 4,4-Diphenylbutadien-1,1-dicarbonsäure, wie z.B. der Bis(2-ethylhexyl)ester;
2-Phenylbenzimidazol-4-sulfonsäure sowie 2-Phenylbenzimidazol- 5-sulfonsäure oder deren Salze;
Derivate von Benzoxazolen;
Derivate von Benztriazolen oder 2-(2'-Hydroxyphenyl)benztriazolen, wie z.B. 2-(2H-Benztriazol-2-yl)-4-methyl-6-(2-methyl-3- ((1,1,3,3-tetramethyl-1-(trimethylsilyloxy)disiloxanyl)-propyl)- phenol, 2-(2'-Hydroxy-5'-methylphenyl)benztriazol, 2-(3',5'-Di-tert.-butyl-2'-hydroxyphenyl)benztriazol, 2-(5'-tert.-Butyl-2'- hydroxyphenyl)benztriazol, 2-[2'-Hydroxy-5'-(1,1,3,3-tetramethylbutyl)phenyl]benztriazol, 2-(3',5'-Di-tert.-butyl-2'-hydroxyphenyl)-5-chlorbenztriazol, 2-(3'-tert.-Butyl-2'-hydroxy-5'-methylphenyl)-5-chlorbenztriazol, 2-(3'-sec.-Butyl-5'-tert.-butyl- 2'-hydroxyphenyl)benztriazol, 2-(2'-Hydroxy-4'-octyloxyphenyl)-benztriazol, 2-(3',5'-Di-tert.-amyl-2'-hydroxyphenyl)benztriazol, 2-[3',5'-Bis(α,α-dimethylbenzyl)-2'-hydroxyphenyl]benztriazol, 2-[3'-tert.-Butyl-2'-hydroxy-5'-(2-octyloxycarbonylethyl)phenyl]- 5-chlorbenztriazol, 2-[3'-tert.-Butyl-5'-(2-(2-ethylhexyloxy)- carbonylethyl)-2'-hydroxyphenyl]-5-chlorbenztriazol, 2[3'-tert.-Butyl-2'-hydroxy-5'-(2-methoxycarbonylethyl)phenyl]-5-chlorbenztriazol, 2-[3'-tert.-Butyl-2'-hydroxy-5'-(2-methoxycarbonylethyl)phenyl]benztriazol, 2-[3'-tert.-Butyl-2'-hydroxy-5'-(2-octyloxycarbonylethyl)phenyl]benztriazol, 2-[3'-tert.-Butyl-5'-(2- (2-ethylhexyloxy)carbonylethyl)-2'-hydroxyphenyl]benztriazol, 2-(3'-Dodecyl-2'-hydroxy-5'-methylphenyl)benztriazol, 2-[3'- tert.-Butyl-2'-hydroxy-5'-(2-isooctyloxycarbonylethyl)phenyl]- benztriazol, 2,2'-Methylen-bis[4-(1,1,3,3-tetramethylbutyl)-6- benztriazol-2-yl-phenol], das vollveresterte Produkt von 2-[3'- tert.-Butyl-5'-(2-methoxycarbonylethyl)-2'-hydroxyphenyl]-2H-benztriazol mit Polyethylenglycol 300, [R-CH2CH2-COO(CH2)3-]2 mit R gleich 3'-tert.-Butyl-4-hydroxy-5'-2H-benztriazol-2-ylphenyl, 2-[2'-Hydroxy-3'-(α,α-dimethylbenzyl)-5'-(1,1,3,3-tetramethylbutyl)phenyl]benztriazol, 2-[2'-Hydroxy-3'-(1,1,3,3-tetramethylbutyl)-5'-(α,α-dimethylbenzyl)phenyl]benztriazol;
Benzylidencampher oder seine Derivate, wie sie z. B. in der DE-A 38 36 630 genannt sind, z.B. 3-Benzylidencampher, 3(4'-Methylbenzyliden)d-1-campher;
α-(2-Oxoborn-3-yliden)toluol-4-sulfonsäure oder ihre Salze, N,N,N-Trimethyl-4-(2-oxoborn-3-ylidenmethyl)anilinium-monosulfat;
Dibenzoylmethane, wie z.B. 4-tert.-Butyl-4'-methoxydibenzoylmethan;
2,4,6-Triaryltriazin-Verbindungen wie 2,4,6-Tris-{N-[4-(2-ethylhex-1-yl)oxycarbonylphenyl]amino}-1,3,5-triazin, 4,4'-((6- (((tert.-Butyl)aminocarbonyl)phenylamino)-1,3,5-triazin-2,4- diyl)imino)bis(benzoesäure-2'-ethylhexylester);
2-(2-Hydroxyphenyl)-1,3,5-triazine, wie z.B. 2,4,6-Tris(2-hydroxy-4-octyloxyphenyl)1,3,5-triazin, 2-(2-Hydroxy-4-octyloxyphenyl)-4,6-bis(2,4-dimethylphenyl)-1,3,5- triazin, 2-(2,4-Dihydroxyphenyl)-4,6-bis(2,4-dimethylphenyl)-1,3,5-triazin, 2,4-Bis- (2-hydroxy-4-propyloxyphenyl)-6-(2,4-dimethylphenyl)-1,3,5-triazin, 2-(2-Hydroxy-4- octyloxyphenyl)-4,6-bis(4-methylphenyl)- 1,3,5-triazin, 2-(2-Hydroxy-4-dodecyloxyphenyl)-4,6-bis(2,4-dimethylphenyl)-1,3,5-triazin, 2-[2-Hydroxy-4-(2-hydroxy-3-butyloxypropyloxy)phenyl]-4,6-bis(2,4-dimethylphenyl)-1,3,5-triazin, 2-[2-Hydroxy-4-(2-hydroxy-3-octyloxypropyloxy)phenyl]-4,6-bis- (2,4-di-methylphenyl)-1,3,5-triazin, 2-(2-Hydroxy-4-tridecyloxyphenyl)-4,6-bis(2,4-dimethylphenyl)-1,3,5-triazin, 2-[4-(Dodecyloxy/tridecyloxy-2-hydroxypropoxy)-2-hydroxyphenyl]-4,6-bis(2,4- dimethylphenyl)-1,3,5-triazin, 2-[2-Hydroxy-4(2-hydroxy-3-dodecyloxypropoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2- Hydroxy-4-methoxyphenyl)4,6-diphenyl-1,3,5-triazin, 2,4,6-Tris[2- hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2- Hydroxy-4-[3-(2-ethylhexyl-1-oxy)-2-hydroxypropyloxy]phenyl}-4,6- bis(2,4-dimethylphenyl)-1,3,5-triazin.

Weitere geeignete UV-Absorber kann man der Schrift Cosmetic Legislation, Vol.1, Cosmetic Products, European Commission 1999, S. 64-66 entnehmen, auf die hiermit Bezug genommen wird.

Geeignete UV-Absorber werden außerdem in den Zeilen 14 bis 30 ([0030]) auf Seite 6 der EP 1 191 041 A2 beschrieben. Auf diese wird vollinhaltlich Bezug genommen.

Die UV-Absorber werden in der Regel in einer Menge von 5 Gew.-% bis 15 Gew.-% bezogen auf das thermoplastische Polymer der Deckschicht (2) oder der Innenschicht (3) eingesetzt. Bevorzugt werden von 7 bis 14 Gew.-% UV-Absorber eingesetzt, ganz bevorzugt von 8 bis 12 Gew.-%, insbesondere von 9 bis 11 Gew.%.

Der Anteil der UV-Strahlung der auf die Oberfläche des erfindungsgemäßen mehrschichtigen Formkörpers trifft und von diesem absorbiert wird ist von der jeweiligen gewünschten Anwendung abhängig. Beispielsweise absorbiert eine Ausführungsform des erfindungsgemäßen mehrschichtigen Formkörpers mehr als 5% der auf seiner Oberfläche einfallenden UV-Strahlung. Bevorzugt werden hierbei mehr als 20%, ganz bevorzugt mehr als 50% und insbesondere mehr als 90% der auf die Oberfläche auftreffenden UV-Strahlung absorbiert.

In der Regel ist es für die Verwendung des erfindungsgemäßen mehrschichtigen Formkörpers vorteilhaft einen möglicht hohen Anteil der IR- und UV-Strahlung zu absorbieren, im sichtbaren Bereich des Spektrums wird jedoch gleichzeitig eine möglichst hohe Transparenz des mehrschichtigen Formkörpers bevorzugt. In der Regel beträgt die Transparenz im sichtbaren Bereich des Spektrums mehr als 20%. Bevorzugt beträgt die Transparenz im sichtbaren Bereich des Spektrums mehr als 30%, ganz bevorzugt mehr als 40%, insbesondere mehr als 50%.

Weiterhin ist es vorteilhaft, dass die erfindungsgemäßen mehrschichtigen Formkörper in der Regel nur eine geringe Trübung aufweisen. Im Allgemeinen liegt die Trübung unter 5%, bevorzugt unter 2%, ganz bevorzugt unter 1,8% und insbesondere unter 1,6%.

In einer weiteren Ausführungsform des mehrschichtigen Formkörpers (1) werden zusätzlich nichtpartikuläre organische IR-Absorber in der Deckschicht (2) eingesetzt, die die Absorptionswirkung der nanoskaligen IR-Absorber ergänzen und verbessern.

In einer weiteren Ausführungsform des mehrschichtigen Formkörpers (1) werden zusätzlich Antioxidantien in der Deckschicht (2) eingesetzt.

In einer weiteren Ausführungsform des mehrschichtigen Formkörpers (1) werden zusätzlich UV-Absorber und nichtpartikuläre organische IR-Absorber in der Deckschicht (2) eingesetzt.

In einer weiteren Ausführungsform des mehrschichtigen Formkörpers (1) werden zusätzlich UV-Absorber und Antioxidantien in der Deckschicht (2) eingesetzt.

In einer weiteren Ausführungsform des mehrschichtigen Formkörpers (1) werden zusätzlich Antioxidantien und nichtpartikuläre organische IR-Absorber in der Deckschicht (2) eingesetzt.

In einer weiteren Ausführungsform des mehrschichtigen Formkörpers (1) werden zusätzlich UV-Absorber, Antioxidantien und nichtpartikuläre organische IR-Absorber in der Deckschicht (2) eingesetzt.

Weiterhin können vom Fachmann die bekannten Polymeradditive wie beispielsweise Farbmittel, z.B. Farbstoffe und/oder Pigmente, Gleitmittel, Schlagzähmodifikatoren, Netzmittel, Antioxidantien, Biozide, Flammschutzmittel, Füllstoffe, z.B. Silika, Aerogele oder Ruß, Glaskugeln, Fasern, z.B. Kohlefasern und/oder Glasfasern, Antistatika, Anorganische Salze, z.B. Sulfate oder Oxide, wie Titandioxid oder Bariumsulfat, Perlglanzpigmente, oder NIR-reflektierende Substanzen sowohl in der Deckschicht (2), in der Innenschicht (3) als auch in den optionalen weiteren Schichten eingesetzt werden.

In einer weiteren Ausführungsform können die weiteren Schichten des erfindungsgemäßen mehrschichtigen Formkörpers (1) ebenfalls die oben genannten Additive, wie UV-Absorber, Stabilisatoren, Antioxidantien, etc. in einer Menge wie für die Deckschicht (2) oder die Innenschicht (3) beschrieben enthalten.

In einer weiteren Ausführungsform können die weiteren Schichten des erfindungsgemäßen mehrschichtigen Formkörpers (1) ebenfalls IR-Absorber in einer Menge wie für die Deckschicht (2) beschrieben enthalten.

Die Gestalt der erfindungsgemäßen mehrschichtigen Formkörper kann je nach gewünschter Anwendung sehr unterschiedlich sein. Im Allgemeinen ist die gesamte Schichtdicke des mehrschichtigen Formkörpers, als Summe der Schichtdicken von Deckschicht, Innenschicht und optionalen weiteren Schichten geringer als die Länge oder die Breite des Formkörpers. Bevorzugt sind die Länge und/oder die Breite des Formkörpers mindestens um einen Faktor 10 größer als die gesamte Schichtdicke, besonders bevorzugt um mindestens einen Faktor 20, insbesondere um mindestens den Faktor 100.

Die erfindungsgemäßen Formkörper liegen bevorzugt in Form von Platten, beispielsweise Hohlkammerplatten, Doppel- oder Multistegplatten, Massivplatten oder Folien vor.

Ein weitere Gegenstand der Erfindung ist ein Verfahren zur Herstellung eines mehrschichtigen Formkörpers (1) wobei eine Deckschicht (2) enthaltend ein thermoplastisches Polymer, mindestens einen nanoskaligen IR-Absorber, optional mindestens einen UV-Absorber, optional mindestens einen organischen IR Absorber und optional Antioxidantien, auf die Oberfläche einer Innenschicht (3) enthaltend ein thermoplastisches Polymer aufgebracht wird, wobei der IR-Absorber ein nanopartikuläres Zinn-Oxid dotiert mit Antimon oder Indium oder ein nanopartikuläres Borid der seltenen Erden ist.

Deckschicht (2) und Innenschicht (3) werden hierbei zuvor entweder gleichzeitig oder nacheinander durch dem Fachmann bekannte Verfahren hergestellt. Beispielsweise lassen sich die Schichten durch Extrusion, Coextrusion oder dem CAST Verfahren herstellen.

Das Aufbringen der Deckschicht (2) auf die Innenschicht (3) erfolgt hierbei durch Coextrusion, Laminieren oder Aufkleben. Bevorzugt durch Coextrusion.

In einer bevorzugten Ausführungsform des Verfahrens zur Herstellung eines mehrschichtigen Formkörpers (1) werden die Deckschicht (2) und Innenschicht (3) gleichzeitig durch Coextrusion hergestellt.

In einer Ausführungsform des durch Coextrusion hergestellten erfindungsgemässen mehrschichtigen Formkörpers (1) beträgt die Schichtdicke der Deckschicht (2) von 0,01 mm bis 0,15 mm. Bevorzugt beträgt die Schichtdicke der Deckschicht hierbei von 0,015 bis 0,1 mm, ganz bevorzugt von 0,02 bis 0,09 mm, insbesondere von 0,025 bis 0,08 mm.

In einer Ausführungsform des mehrschichtigen Formkörpers (1) entspricht die Schmelzviskosität des thermoplastischen Polymers der Deckschicht (2) der Schmelzviskosität des thermoplastischen Polymers der Innenschicht (3). In einer anderen Ausführungsform des mehrschichtigen Formkörpers (1) können die Schmelzviskositäten der thermoplastischen Polymere der Deckschicht (2) und der Innenschicht (3) um bis zu 10% voneinander abweichen, bevorzugt beträgt die Abweichung weniger als 5% und ganz bevorzugt weniger als 1%.

Im Allgemeinen ist es vorteilhaft bei der Herstellung des mehrschichtigen Formkörpers durch beispielsweise Lamination oder Coextrusion die Schmelzviskositäten der thermoplastischen Polymere der Deckschicht (2) und der Innenschicht (3) aufeinander abzustimmen.

In einer bevorzugten Ausführungsform des Verfahrens zur Herstellung eines mehrschichtigen Formkörpers (1) weichen die Schmelzviskositäten der thermoplastischen Polymere der Deckschicht (2) und der Innenschicht (3), insbesondere am Ort des ersten Kontakts der Schmelzen, um bis zu 10% voneinander ab, bevorzugt beträgt die Abweichung weniger als 5% und ganz bevorzugt weniger als 1 %.

Die erfindungsgemäßen mehrschichtigen Formkörper werden im Allgemeinen durch Extrusion gefolgt durch eine Laminierunge der Schichten in einer Walzenmühle oder einem "roll stack" Prozess hergestellt. Die Extrusion der einzelnen Schichten kann beispielsweise in einem Ein- oder Zweischneckenextruder durchgeführt werden. Bevorzugt werden die Schichten mit Hilfe eines Ein-Schnecken-Extruders extrudiert und in einer Walzmühle laminiert. Ganz bevorzugt werden die Schichten in einem Ein- oder Zweischneckenextruder, insbesondere mit einem Ein-Schnecken-Extruder, Coextrudiert und optional in einer Walzmühle laminiert. Die Walzmühle kann hierbei beispielsweise zwei oder drei Rollen aufweisen.

In einer Ausführungsform des erfindungsgemäßen Verfahrens werden die IR-Absorber in Form einer Suspension eingesetzt. Bevorzugt enthält die Suspension einen Feststoffanteil von mindestens 10 Gew.-% an nanoskaligem IR-Absorber bezogen auf das Gesamtgewicht der Suspension, besonders bevorzugt mindestens 20 Gew.-% und insbesondere mindestens 25 Gew.-%. Vorteilhaft ist, dass sich durch den hohen Feststoffanteil eine hohe Dosierung des nanoskaligen IR-Absorbers in der Deckschicht erreichen lässt.

In einer Ausführungsform der Extrusion der Deckschicht (2) und der Innenschicht (3) werden die Additive, beispielsweise der nanoskalige IR-Absorber, insbesondere als Suspension, oder ein UV-Absorber, dem Extruder gemeinsam mit dem thermoplastischen Polymer am Einfüllschacht zugegeben.

In einer anderen Ausführungsform der Extrusion der Deckschicht (2) und der Innenschicht (3) werden die Additive, beispielsweise der nanoskalige IR-Absorber, insbesondere als Suspension, oder ein UV-Absorber, dem Extruder in Form eines Masterbatchs zugegeben. Während das thermoplastische Polymer am Einfüllschacht in den Extruder zugegeben wird, kann der Masterbatch entweder auch am Einfüllschacht oder durch einen separaten nachgelagerten Einlass dem Extruder zugegeben werden.

Beispielsweise wird in der Herstellung der Deckschicht (2) das thermoplastische Polymer in den Einlassschacht eines Ein-Schnecken-Extruders gefüllt, während der nanoskalige IR-Absorber in Form eines Masterbatch durch einen separaten nachgelagerten Einlass dem Extruder zugeführt wird.

Beispielsweise wird in der Herstellung der Deckschicht (2) das thermoplastische Polymer in den Einlassschacht eines Ein-Schnecken-Extruders gefüllt, während der nanoskalige IR-Absorber und der UV-Absorber jeweils in Form eines Masterbatch durch einen separaten nachgelagerten Einlass dem Extruder zugeführt werden.

In einer anderen Ausführungsform des erfindungsgemäßen Herstellungsverfahrens werden die jeweiligen Zusammensetzungen für die Deckschicht (2) und die Innenschicht (3) getrennt vor der Coextrusion vorkompoundiert. Diese vorkompoundierten Zusammensetzungen können vor der Coextrusion beispielsweise in einem Ein- oder Zweischneckenextruder, einem Kneter, einer Walzenmühle zunächt in der Schmelze vermischt und dann zu beliebeigen Formen, wie Pellets oder Folien, verarbeitet werden, die dann für die Coextrusion verwendet werden. Die vorkompoundierten Zusammensetzungen der Deckschicht (2) und der Innenschicht (3) werden dann für die Coextrusion ihren jeweiligen Extrudern zugeführt.

In einer bevorzugten Ausführungsform des erfindungsgemäßen Verfahrens werden die Deckschicht (2) und der Innenschicht (3) coextrudiert, indem man die Extrudate (Schmelzestöme) der einzelnen Extruder in einen Matrizen-Feedblock leitet, in dem die Extrudate vereinigt werden ehe sie die Matrize erreichen. In einer anderen Ausführungsform treten die Extrudate getrennt in die Matrize ein und werden erst innerhalb des endgültigen Auslasses vereinigt.

Coextrudierte erfindungsgemäße mehrschichtigen Formkörper können im Anschluss an die Coextrusion noch in einer Walzmühle gewalzt werden und liegen häufig in Form einer Folie vor. Im Allgemeinen weisen die so hergestellten Folien eine Dicke von 0,5 bis 35 mm auf.

Ein weiterer Gegenstand der Erfindung ist die Verwendung der erfindungsgemäßen mehrschichtigen Formkörper im Wärmemanagement. Wärmemanagement umfasst die Anwendung in Automobilen, Architektur, Wohn- und Bürogebäuden, Lagerhallen, Stadien, Flughäfen oder anderen Bereichen in denen die Wärme, die durch einfallende Wärmestrahlung erzeugt wird, unerwünscht ist.

Ihre hauptsächliche Verwendung finden die erfindungsgemäßen mehrschichtigen Formkörper im Baubereich, im Fahrzeugbau, in der Luftfahrt, im Schiffsbau, im Eisenbahnbau und in der Elektrik bzw. Elektronik, beispielsweise als Filter für Bildschirme.

Bevorzugt werden die erfindungsgemäßen mehrschichtigen Formkörper als Verglasungs- oder Dachmaterial, als Folien in der Landwirtschaft, insbesondere Gewächshausfolien, oder als Bestandteil von Fenstern eingesetzt.

Selbstverständlich lassen sich mit Hilfe der mehrschichtigen Formkörper auch Gegenstände, insbesondere Bauteile, herstellen, die mehrere mehrschichtige Formkörper enthalten. Beispielsweise können mehrere mehrschichtigen Formkörper als Platten oder Folien durch Abstandshalter getrennt vorliegen, so dass zwischen den Platten oder Folien Luftkanäle entstehen. Die Abstandshalter können ebenfalls aus den thermoplastischen Polymeren der Deckschicht (2) oder der Innenschicht (3) bestehen. Solche Bauteile können insbesondere zum Wärmemangement von Gebäuden eingesetzt werden.

Selbstverständlich können die mehrschichtigen Formkörper auch durch zusätzliche Verfahrensschritte wie thermische Umformung, Blasformen in Produkte unterschiedlicher gewünschter Form und Geometrie umarbeiten.

Die Verwendung der erfindungsgemäßen mehrschichtigen Formkörper, enthaltend nanoskalige IR-Absorber, ermöglicht eine effektive Abschirmung gegen die Einwirkung von Wärmestrahlung auf die Oberfläche von beispielsweise Gebäuden, Fahrzeugen oder Gewächshäusern. Durch diese Materialien wird ein Wärmemanagement von Innenräumen ermöglicht. Im Allgemeinen wird durch diese Materialien eine hohe Transparenz gegenüber sichtbarem Licht bei einer gleichzeitigen effektiven Abschirmung der Wärmestrahlung gewährleistet, so dass Innenräume bei Sonneneinstrahlung hell bleiben und sich nicht so stark erwärmen.

Die Erfindung wird durch die Beispiele und Figuren näher erläutert ohne dass die Beispiele oder Figuren den Gegenstand der Erfindung einschränken.

Es zeigt:
- Figur 1: Schematische Darstellung eines erfindungsgemäßen mehrschichtigen Formkörpers (1) mit einer Deckschicht (2) enthaltend nanoskaligen IR-Absorber (8), Innenschicht (3) und optionalen weiteren Schichten (4), (5), (6) und (7). Wärmestrahlung (9) fällt auf die Deckschicht (2) des mehrschichtigen Formkörpers (1).

## Patentansprüche

1. Mehrschichtiger Formkörper (1) umfassend
a. eine Deckschicht (2) enthaltend
i. ein thermoplastisches Polymer und
ii. mindestens einen nanoskaligen IR-Absorber (8), sowie
b. eine unter der Deckschicht (2) angeordnete Innenschicht (3) enthaltend
i. ein thermoplastisches Polymer
wobei der IR-Absorber ein nanopartikuläres Zinn-Oxid dotiert mit Antimon oder Indium oder ein nanopartikuläres Borid der seltenen Erden ist.

2. Mehrschichtiger Formkörper (1) nach Anspruch 1, wobei die Deckschicht (2) direkt mit der Innenschicht (3) in Kontakt steht.

3. Mehrschichtiger Formkörper (1) nach Anspruch 1 oder 2, wobei als thermoplastisches Polymer in der Deckschicht ein Polyacetal, Polyacrylat. Polyalkylacrylat, Polycarbonat. Polystyrol, Polyester, Polyamid, Polyamidimid, Polyarylat, Polyarylsulfon, Polyethersulfon, Polyphenylsulfid, Polyvinylchlorid, Polysulfon, Polyimid, Polyetherimid, Polytetrafluorethylen, Polyetherketon, Polyetheretherketon, Polyetherketoketon, Polybenzooxazol, Polyoxadiazol, Polybenzothiazinophenothiazin, Polybenzothiazol, Polypyrazinoquinoxalin, Polypyromeilltimid, Polyquinoxalin, Polybenzimidazol, Polyoxindol, Polyoxoisoindolin, Polydisoxoisoindolin, Polytriazin, Polypyridazin, Polypiperazin, Polypyridin, Polypiporidin, Polytriazol, Polypyrazol, Polypyrrolidin, Polycarboran, Polyoxabicyclononan, Polybicyclonon, Polydibenzofuran, Polyphthalid, Polyacetal, Polyanhydrid, Polyvinylether, Polyvinylthioether, Polyvinylalkohol, Polyvinylketon, Polyvinylhalogenid, Polyvinylnitril, Polyvinylester, Polysulfonat, Polysulfid, Polythioester, Polysulfonamid, Polyuretan, Polyphosphazin, Polysilazan, Polyimid, Polymethylmethacrylat (PMMA), Polyethylenterephthalat (PET), Polyolefine, beispielsweise Polyethylen (PE) oder Polypropylen (PP), Acrylonitril-Styrol-Acrylate (ASA), Polyvinylbutyral oder eine Mischung aus diesen eingesetzt wird.

4. Mehrschichtiger Formkörper (1) nach den Ansprüchen 1 bis 3, wobei als thermoplastisches Polymer in der Innenschicht Polyacetal, Polyacrylat. Polyalkylacrylat, Polycarbonat, Polystyrol, Polyester, Polyamid, Polyamidimid, Polyarylat, Polyarylsulfon, Polyethersulfon, Polyphenylsulfid, Polyvinylchlorid, Polysulfon, Polyimid, Polyetherimid, Polytetrafluorethylen, Polyetherketon, Polyetheretherketon, Polyetherketoketon, Polybenzooxazol, Polyoxadiazol, Polybenzothiazinophenothiazin, Polybenzothiazol, Polypyrazinoquinoxalin, Polypyromellitimid, Polyquinoxalin, Polybenzimidazol, Polyoxindol, Polyoxoisolndolin, Polydisoxoisoindolin, Polytriazin, Polypyridazin, Polypiperazin, Polypyridin, Polypiperidin, Polytriazol, Polypyrazol, Polypyrrolidin, Polycarboran, Polyoxabicyclononan, Polybicyclonon, Polydibenzofuran. Polyphthalid, Polyacetal, Polyanhydrid, Polyvinylether, Polyvinylthioether, Polyvinylalkohol, Polyvinylketon, Polyvinylhalogenid, Polyvinylnitril, Polyvinylester, Polysulfonat, Polysulfid, Polythioester, Polysulfonamid. Polyuretan, Polyphosphazin, Polysilazan, Polyimid, Polymethylmethacrylat (PMMA), Polyethylenterephthalat (PET), Polyolefine, beispielsweise Polyethylen (PE) oder Polypropylen (PP), Acry-Ionitril-Styrol-Acrylate (ASA), Polyvinylbutyral oder eine Mischung aus diesen eingesetzt wird.

5. Mehrschichtiger Formkörper (1) nach den Ansprüchen 1 bis 4, wobei in der Deckschicht (2) als zusätzliche Additive UV-Absorber, nichtpartikufäre organische IR-Absorber, Stabilisatoren, Antioxidantien, Farbmittel, anorg. Salze, Perlglanzpigmente, NIR-reflektierende Substanzen, Antibeschlagsmittel oder Füllstoffe eingesetzt werden.

6. Mehrschichtiger Formkörper (1) nach den Ansprüchen 1 bis 5, wobei in der Innenschicht (3) als zusätzliche Additive UV-Absorber, nichtpartikuläre organische IR-Absorber, Stabilisatoren, Antioxidantien, Farbmittel, anorg. Salze, Perlglanzpigmente, NIR-reflektierende Substanzen, Antibeschlagsmittel oder Füllstoffe eingesetz eingesetzt werden.

7. Mehrschichtiger Formkörper (1) nach den Ansprüchen 1 bis 6, wobei der mehrschichtige Formkörper in Form einer Platte oder Folie vorliegt.

8. Verfahren zur Herstellung eines mehrschichtigen Formkörpers (1), **dadurch gekennzeichnet, dass**
a. eine Deckschicht (2) enthaltend
i. ein thermoplastisches Polymer,
ii. mindestens einen nanoskaligen IR-Absorber,
iii. optional mindestens einen UV Absorber,
iv. optional mindestens einen nichtpartikufären organischen IR Absorber und
v. optional Antioxidantien,
b. auf die Oberfläche einer Innenschicht (3) enthaltend
i. ein thermoplastisches Polymer
aufgebracht wird,
wobei der IR-Absorber ein nanopartikuläres Zinn-Oxid dotiert mit Antimon oder Indium oder ein nanopartikuläres Borid der seltenen Erden ist.

9. Verfahren nach Anspruch 8, **dadurch gekennzeichnet, dass** die Deckschicht (2) und die Innenschicht (3) gleichzeitig oder nacheinander hergestellt werden.

10. Verfahren nach Anspruch 8, **dadurch gekennzeichnet, dass** eine Deckschicht (2) und eine Innenschicht (3)
i. coextrudiert werden.

11. Verfahren nach Anspruch 10, **dadurch gekennzeichnet, dass** der mehrschichtige Formkörper (1) laminiert wird.

12. Verwendung von mehrschichtigen Formkörpern gemäß den Ansprüchen 1 bis 7 im Wärmemanagement.

13. Verwendung von mehrschichtigen Formkörpern gemäß den Ansprüchen 1 bis 7 als Folien in der Landwirtschaft.

14. Verwendung von mehrschichtigen Formkörpern gemäß den Ansprüchen 1 bis 7 als Fensterbestandteil.

15. Verwendung von mehrschichtigen Formkörpern gemäß den Ansprüchen 1 bis 7 als Bestandteil von Hohlkammerplatten, Doppelplatten, Multistegplatten oder Massivplatten.

## Claims

1. A multilayer molding (1) comprising
a. an outer layer (2) comprising
i. a thermoplastic polymer and
ii. at least one nanoscale IR absorber (8), and also
b. an inner layer (3) arranged under the outer layer (2) and comprising
i. a thermoplastic polymer,
where the IR absorber is a nanoparticulate tin oxide doped with antimony or indium, or is a nanoparticulate boride of the rare earths.

2. The multilayer molding (1) according to claim 1, where the outer layer (2) is in direct contact with the inner layer (3).

3. The multilayer molding (1) according to claim 1 or 2, where the thermoplastic polymer used in the outer layer comprises a polyacetal, polyacrylate, polyalkyl acrylate, polycarbonate, polystyrene, polyester, polyamide, polyamideimide, polyarylate, polyaryl sulfone, polyether sulfone, polyphenyl sulfide, polyvinyl chloride, polysulfone, polyimide, polyetherimide, polytetrafluoroethylene, polyetherketone, polyetheretherketone, polyetherketoketone, polybenzoxazole, polyoxadiazole, polybenzothiazinophenothiazine, polybenzothiazole, polypyrazinoquinoxaline, polypyromellitimide, polyquinoxaline, polybenzimidazole, polyoxindole, polyoxoisoindoline, polydisoxoisoindoline, polytriazine, polypyridazine, polypiperazine, polypyridine, polypiperidine, polytriazole, polypyrazole, polypyrrolidine, polycarborane, polyoxabicyclononane, polybicyclonone, polydibenzofuran, polyphthalide, polyacetal, polyanhydride, polyvinyl ether, polyvinyl thioether, polyvinyl alcohol, polyvinyl ketone, polyvinyl halide, polyvinyl nitrile, polyvinyl ester, polysulfonate, polysulfide, polythioester, polysulfonamide, polyurethane, polyphosphazine, polysilazane, polyimide, polymethyl methacrylate (PMMA), polyethylene terephthalate (PET), polyolefins, such as polyethylene (PE) or polypropylene (PP), acrylonitrile-styrene-acrylate (ASA), polyvinyl butyral, or a mixture composed of these.

4. The multilayer molding (1) according to claims 1 to 3, where the thermoplastic polymer used in the inner layer comprises polyacetal, polyacrylate, polyalkyl acrylate, polycarbonate, polystyrene, polyester, polyamide, polyamideimide, polyarylate, polyaryl sulfone, polyether sulfone, polyphenyl sulfide, polyvinyl chloride, polysulfone, polyimide, polyetherimide, polytetrafluoroethylene, polyetherketone, polyetheretherketone, polyetherketoketone, polybenzoxazole, polyoxadiazole, polybenzothiazinophenothiazine, polybenzothiazole, polypyrazinoquinoxaline, polypyromellitimide, polyquinoxaline, polybenzimidazole, polyoxindole, polyoxoisoindoline, polydisoxoisoindoline, polytriazine, polypyridazine, polypiperazine, polypyridine, polypiperidine, polytriazole, polypyrazole, polypyrrolidine, polycarborane, polyoxabicyclononane, polybicyclonone, polydibenzofuran, polyphthalide, polyacetal, polyanhydride, polyvinyl ether, polyvinyl thioether, polyvinyl alcohol, polyvinyl ketone, polyvinyl halide, polyvinyl nitrile, polyvinyl ester, polysulfonate, polysulfide, polythioester, polysulfonamide, polyurethane, polyphosphazine, polysilazane, polyimide, polymethyl methacrylate (PMMA), polyethylene terephthalate (PET), polyolefins, such as polyethylene (PE) or polypropylene (PP), acrylonitrile-styrene-acrylate (ASA), polyvinyl butyral, or a mixture composed of these.

5. The multilayer molding (1) according to claims 1 to 4, where the following are used as additional additives in the outer layer (2): UV absorbers, nonparticulate organic IR absorbers, stabilizers, antioxidants, colorants, inorganic salts, pearlluster pigments, NIR-reflective substances, antifogging agents, or fillers.

6. The multilayer molding (1) according to claims 1 to 5, where UV absorbers, nonparticulate organic IR absorbers, stabilizers, antioxidants, colorants, inorganic salts, pearl-luster pigments, NIR-reflective substances, antifogging agents, or fillers are used as additional additives in the inner layer (3).

7. The multilayer molding (1) according to claims 1 to 6, which takes the form of a panel or sheeting.

8. A process for the production of a multilayer molding (1), which comprises
a. applying an outer layer (2) comprising
i. a thermoplastic polymer,
ii. at least one nanoscale IR absorber,
iii. optionally at least one UV absorber,
iv. optionally at least one nonparticulate organic IR absorber, and
v. optionally antioxidants
b. to the surface of an inner layer (3) comprising
i. a thermoplastic polymer,
where the IR absorber is a nanoparticulate tin oxide doped with antimony or indium, or is a nanoparticulate boride of the rare earths.

9. The process according to claim 8, wherein the outer layer (2) and the inner layer (3) are produced simultaneously or in succession.

10. The process according to claim 8, which comprises coextruding an outer layer (2)
and an inner layer (3).

11. The process according to claim 10, wherein the multilayer molding (1) is laminated.

12. The use of multilayer moldings according to claims 1 to 7 in heat management.

13. The use of multilayer moldings according to claims 1 to 7 as agricultural sheeting.

14. The use of multilayer moldings according to claims 1 to 7 as window component.

15. The use of multilayer moldings according to claims 1 to 7 as constituent of panels having cavities, twin-web panels, multi-web sandwich panels, or solid panels.

## Revendications

1. Corps moulé multicouche (1), comprenant :
a. une couche de surface (2), contenant :
i. un polymère thermoplastique et
ii. au moins un absorbeur IR nanométrique (8), ainsi que
b. une couche intérieure (3) agencée sous la couche de surface (2), contenant :
i. un polymère thermoplastique,
l'absorbeur IR étant un oxyde d'étain nanoparticulaire dopé avec de l'antimoine ou de l'indium ou un borure nanoparticulaire de terres rares.

2. Corps moulé multicouche (1) selon la revendication 1, dans lequel la couche de surface (2) est en contact direct avec la couche intérieure (3).

3. Corps moulé multicouche (1) selon la revendication 1 ou 2, dans lequel un polyacétal, un polyacrylate, un polyacrylate d'alkyle, un polycarbonate, un polystyrène, un polyester, un polyamide, un polyamide-imide, un polyarylate, une polyarylsulfone, une polyéthersulfone, un polysulfure de phényle, un polychlorure de vinyle, une polysulfone, un polyimide, un polyétherimide, un polytétrafluoroéthylène, une polyéthercétone, une polyétheréthercétone, une polyéthercétocétone, un polybenzooxazole, un polyoxadiazole, une polybenzothiazinophénothiazine, un polybenzothiazole, une polypyrazinoquinoxaline, un polypyromellitimide, une polyquinoxaline, un polybenzimidazole, un polyoxindole, une polyoxoisoindoline, une polydisoxoisoindoline, une polytriazine, une polypyridazine, une polypipérazine, une polypyridine, une polypipéridine, un polytriazole, un polypyrazole, une polypyrrolidine, un polycarborane, un polyoxabicyclononane, une polybicyclonone, un polydibenzofurane, un polyphtalide, un polyacétal, un polyanhydride, un polyéther de vinyle, un polythioéther de vinyle, un alcool polyvinylique, une polyvinylcétone, un polyhalogénure de vinyle, un polyvinylnitrile, un polyester de vinyle, un polysulfonate, un polysulfure, un polythioester, un polysulfonamide, un polyuréthane, une polyphosphazine, un polysilazane, un polyimide, un polyméthacrylate de méthyle (PMMA), un polyéthylène téréphtalate (PET), des polyoléfines, par exemple le polyéthylène (PE) ou le polypropylène (PP), des acrylonitrile-styrène-acrylates (ASA), un polyvinylbutyral ou un mélange de ceux-ci sont utilisés en tant que polymère thermoplastique dans la couche de surface.

4. Corps moulé multicouche (1) selon les revendications 1 à 3, dans un polyacétal, un polyacrylate, un polyacrylate d'alkyle, un polycarbonate, un polystyrène, un polyester, un polyamide, un polyamide-imide, un polyarylate, une polyarylsulfone, une polyéthersulfone, un polysulfure de phényle, un polychlorure de vinyle, une polysulfone, un polyimide, un polyétherimide, un polytétrafluoroéthylène, une polyéthercétone, une polyétheréthercétone, une polyéthercétocétone, un polybenzooxazole, un polyoxadiazole, une polybenzothiazinophénothiazine, un polybenzothiazole, une polypyrazinoquinoxaline, un polypyromellitimide, une polyquinoxaline, un polybenzimidazole, un polyoxindole, une polyoxoisoindoline, une polydisoxoisoindoline, une polytriazine, une polypyridazine, un polypipérazine, une polypyridine, un polypipéridine, un polytriazole, un polypyrazole, une polypyrrolidine, un polycarborane, un polyoxabicyclononane, une polybicyclonone, un polydibenzofurane, un polyphtalide, un polyacétal, un polyanhydride, un polyéther de vinyle, un polythioéther de vinyle, un alcool polyvinylique, une polyvinylcétone, un polyhalogénure de vinyle, un polyvinylnitrile, un polyester de vinyle, un polysulfonate, un polysulfure, un polythioester, un polysulfonamide, un polyuréthane, une polyphosphazine, un polysilazane, un polyimide, un polyméthacrylate de méthyle (PMMA), un polyéthylène téréphtalate (PET), des polyoléfines, par exemple le polyéthylène (PE) ou le polypropylène (PP), des acrylonitrile-styrol-acrylates (ASA), un polyvinylbutyral ou un mélange de ceux-ci sont utilisés en tant que polymère thermoplastique dans la couche intérieure.

5. Corps moulé multicouche (1) selon les revendications 1 à 4, dans lequel des absorbeurs UV, des absorbeurs IR organiques non particulaires, des stabilisateurs, des antioxydants, des colorants, des sels inorganiques, des pigments nacrés, des substances réfléchissant le NIR, des agents antibuée ou des charges sont utilisés en tant qu'additifs supplémentaires dans la couche de surface (2).

6. Corps moulé multicouche (1) selon les revendications 1 à 5, dans lequel des absorbeurs UV, des absorbeurs IR organiques non particulaires, des stabilisateurs, des antioxydants, des colorants, des sels inorganiques, des pigments nacrés, des substances réfléchissant le NIR, des agents antibuée ou des charges sont utilisés en tant qu'additifs supplémentaires dans la couche intérieure (3).

7. Corps moulé multicouche (1) selon les revendications 1 à 6, dans lequel le corps moulé multicouche se présente sous la forme d'une plaque ou d'un film.

8. Procédé de fabrication d'un corps moulé multicouche (1), **caractérisé en ce que**
a. une couche de surface (2), contenant :
i. un polymère thermoplastique,
ii. au moins un absorbeur IR nanométrique,
iii. éventuellement au moins un absorbeur UV,
iv. éventuellement au moins un absorbeur IR organique non particulaire, et
v. éventuellement des antioxydants,
b. est appliquée sur la surface d'une couche intérieure (3), contenant :
i. un polymère thermoplastique,
l'absorbeur IR étant un oxyde d'étain nanoparticulaire dopé avec de l'antimoine ou de l'indium ou un borure nanoparticulaire de terres rares.

9. Procédé selon la revendication 8, **caractérisé en ce que** la couche de surface (2) et la couche intérieure (3) sont fabriquées simultanément ou successivement.

10. Procédé selon la revendication 8, **caractérisé en ce qu'**une couche de surface (2) et une couche intérieure (3) sont coextrudées.

11. Procédé selon la revendication 10, **caractérisé en ce que** le corps moulé multicouche (1) est stratifié.

12. Utilisation de corps moulés multicouches selon les revendications 1 à 7, dans la gestion de la chaleur.

13. Utilisation de corps moulés multicouches selon les revendications 1 à 7, sous la forme de films en agriculture.

14. Utilisation de corps moulés multicouches selon les revendications 1 à 7 en tant que constituant de fenêtre.

15. Utilisation de corps moulés multicouches selon les revendications 1 à 7 en tant que constituant de plaques creuses, de plaques doubles, de plaques à traverses multiples ou de plaques massives.
